# EUROPEAN PATENT SPECIFICATION

(11) **EP 2 620 301 B1**
(45) Date of publication and mention of the grant of the patent: **19.11.2014**
(21) Application number: 12152993.7
(22) Date of filing: 30.01.2012
(51) Int. Cl.: B60G 3/18

(54) **Integral link front suspension**
Integrallenker-Vorderradaufhängung
Suspension avant de lien intégral

(43) Date of publication of application: 31.07.2013
(73) Proprietor: Volvo Car Corporation, 40531 Göteborg (SE)
(72) Inventor: Andersson, John-Erik, 444 55 Stenungsund (SE); Wikström, Mattias, 442 44 Kungälv (SE)
(74) Representative: Widahl, Jenny Marie

(56) References cited:
- WO-A1-2006/129065
- JP-A- 6 072 116
- JP-A- 8 207 528
- JP-A- 9 002 032

## Description

### TECHNICAL FIELD

The present disclosure relates to a front wheel suspension assembly for a vehicle, comprising a lower control arm which at a vehicle wheel connection end is hingedly connectable to a lower end of a vehicle wheel carrier, and which at a vehicle frame connection end is hingedly connectable to a vehicle frame, an upper control arm which at a vehicle wheel connection end is hingedly connectable to an upper end of said vehicle wheel carrier, and which at a vehicle frame connection end is hingedly connectable to said vehicle frame, wherein said vehicle wheel connection end of said upper control arm is adapted to be located generally within a vehicle wheel rim, and a shock absorber which is connectable to a vehicle body and is hingedly connected to one of said upper and lower control arms.

### BACKGROUND OF THE INVENTION

A front wheel suspension assembly of the kind defined above is used in a surrounding in which design constraints are rather great. Several issues affect the design possibilities for such an assembly. One issue is its packaging, *i.e.* the space which is occupied by the front wheel suspension assembly is limited due to the closeness to the engine, the wheel housing, height restrictions due to pedestrian impact safety provisions on the engine bonnet in combination with designer wishes of a low bonnet profile and also ground clearance provisions. Other issues are the necessity to allow adequate steering capability for the front wheels, and in case of a front wheel drive system the presence of the drive shaft. A third issue is the necessity to control the front wheel camber angle as well as the caster angle.

In order to provide adequate ride comfort, braking characteristics and noise, vibration and harshness properties, especially for the high-end range of vehicles, a properly designed front wheel suspension assembly includes sufficient vertical wheel travel, longitudinal compliance at wheel centre and longitudinal stiffness at ground level.

During driving, longitudinal forces appear *e.g*. when travelling on uneven roads or from engine torque. Such longitudinal forces appear, especially in a front wheel drive vehicle, in the wheel centre. Through proper design of the longitudinal compliance at wheel centre, it is possible to reduce the transition of these forces into the vehicle body and to consequently improve the ride comfort experienced by the vehicle passengers.

Longitudinal forces may also appear from vehicle braking, which forces in a vehicle having brake calipers mounted to the vehicle wheel carrier, appear in ground plane. A wheel suspension assembly should provide high stiffness at ground level in order to provide adequate braking characteristics, especially during ABS-braking when wheel slip may otherwise occur if not detected properly.

Several front wheel suspension systems exist. Such systems include a McPherson strut, which will provide a relatively high longitudinal stiffness at ground level due to its vertically high found instantaneous centre of rotation, located close to its upper attachment point of the shock absorber. Another type of suspension is the double link arm suspension, having either a high mounted upper link arm or a low mounted upper link arm. Since the distance between the wheel centre and a king-pin holding the wheel should be small, the upper link arm consequently need to be provided either above the wheel or within the wheel rim. Both of these types of suspensions will have an instantaneous centre of rotation located vertically seen lower than the upper link arm, which is not advantageous in terms of longitudinal stiffness at ground level. It may even be critical for a low mounted upper link arm type if comparing with a high mounted type providing the same longitudinal compliance at wheel centre.

For properties other than longitudinal stiffness at ground level the double link arm suspension type may perform better than the McPherson type. Such properties may include camber compensation and roll centre migration. In a McPherson suspension type the shock absorber is used instead of an upper link arm and consequently cannot perform as well for these properties. Camber compensation affects lateral grip and roll centre migration affects linear steering behaviour and diagonal roll and are important geometrical effects. Best properties in this respect may generally be found for the low mounted upper link arm type of suspension.

A known front wheel suspension having a double link arm of which the upper one is located at a vertically seen low position is disclosed in US 4,986,565. Although it is a simple suspension design which provides high camber stiffness and for which it is simple to find appropriate fixation structures with a transversely mounted drive line, it induces undesired bending forces into the shock absorber and it provides limited possibilities to find appropriate packaging space and elastokinematic properties.

JP 9002032 discloses a front suspension. An upper link; a lower link, and a tie rod are connected to a wheel supporting member rotatably supporting a wheel so as to extend nearly in the vehicle width direction, and a windup link is connected between the upper link and the lower link.

JP 6072116 describes a suspension with an upper arm connected pivotably to a wheel carrier at the outer end and shaft-supported through a rubber bushing by a car body at the inner end. A lower arm is connected pivotably at the outer end to a wheel carrier and shaft-supported by the car body through a pair of rubber bushings at the two inner ends spaced from each other back and forth, and a connecting link connected pivotably to the upper arm at the upper end and connected pivotably to the lower arm at the lower end.

JP 8207528 discloses a front suspension device with upper and lower arms. A wind-up link is connected between the upper and lower arms.

It is consequently an object of the present invention to provide a front wheel suspension with improved over-all properties with regard to packaging, geometry and elastokinematics.

### SUMMARY OF THE INVENTION

This and other objects are achieved by a first aspect of the present invention in which a front wheel suspension assembly for a vehicle is disclosed, which comprises a lower control arm which at a vehicle wheel connection end is hingedly connectable to a lower end of a vehicle wheel carrier, and which at a vehicle frame connection end is hingedly connectable to a vehicle frame, an upper control arm which at a vehicle wheel connection end is hingedly connectable to an upper end of said vehicle wheel carrier, and which at a vehicle frame connection end is hingedly connectable to said vehicle frame, wherein said vehicle wheel connection end of said upper control arm is adapted to be located generally within a vehicle wheel rim, a shock absorber which is connectable to a vehicle body and is hingedly connected to one of said upper and lower control arms, wherein a linkage rod is hingedly connected between said lower control arm and said upper control arm.

By the presence of the linkage rod the caster angle may be adequately controlled. Thereby the longitudinal stiffness at ground level is much improved in a suspension system which otherwise is known to provide poor figures in this regard. The linkage rod provides for cooperation between the lower control arm and the upper control arm such that any movements in the one are shared with the other. The resulting forces are transmitted to the vehicle frame through the control arms. Furthermore, longitudinal stiffness in ground plane which affects braking properties may be balanced against longitudinal compliance which affects ride comfort and noise, vibration and harshness properties, and against wheel wind-up which affects braking when driving in a turn. Other properties of the front wheel suspension assembly remain generally unaffected, such as low height requirements. The known advantages of such a system thus remain.

A reason why the wheel suspension assembly is particularly advantageous as a front wheel type of suspension assembly is the presence of the tie rod and the steering gear. The steering capacity may not be interrupted by the wheel suspension assembly and as a consequence the packaging is more important and more difficult at the front wheels.

According to an embodiment of the present invention said shock absorber is hingedly connected to only one of said upper and lower control arms.

Hereby the disadvantages of the suspension system disclosed in US 4,986,565 as discussed above, such as induced bending forces in the shock absorber, do not appear.

According to an embodiment of the present invention either one or both of said lower control arm and said upper control arm is a rigid rod.

The forces that may be induced in the upper and lower control arms through *i.a.* the linkage rod are large and the rigidity should be seen in relation to these forces.

According to an embodiment of the present invention said lower control arm is at its vehicle frame connection end hingedly connectable to said vehicle frame at two generally horizontally located positions.

The lower control arm may consequently provide adequate support for the lower end of the vehicle wheel carrier and the linkage rod in both a transverse direction and a longitudinal direction as seen in the driving direction of the vehicle.

According to an embodiment of the present invention said lower control arm is generally L-shaped.

Such a shape allows for separate handling of forces in transversal and longitudinal direction respectively as seen in relation to the driving direction of the vehicle. A fastener located at the "heel" of the L-shaped control arm may be given relatively seen rigid characteristics to handle transversal forces, whereas a fastener at the "toe" of the L-shaped control arm may be given relatively seen loose characteristics to handle longitudinal forces and induce smoothness for the wheel carrier and the wheel.

According to an embodiment of the present invention said linkage rod is located closer to the respective vehicle wheel connection end than to the respective vehicle frame connection end.

A position as close to the vehicle wheel carrier as possible is desirable, but due to space constraints this is often not possible. A position as claimed still provides for the advantages of the present invention while at the same time balancing the forces induced in the linkage rod and the resulting design requirements thereof.

According to an embodiment of the present invention said lower control arm has a vertically seen, upwardly reaching shoulder for connection to said linkage rod.

Such a design improves accessibility for the linkage rod to the lower control arm.

According to an embodiment of the present invention said linkage rod and said lower control arm are interconnected by a ball joint. According to an embodiment of the present invention said linkage rod and said upper control arm are interconnected by a bushing.

Adequate movability of the front wheel suspension assembly is provided as well as adequate force transfer through the system of the upper and lower control arms and the linkage rod.

According to an embodiment of the present invention said upper control arm has a vertically seen, upwardly reaching shoulder for connection to said linkage rod.

Such a design improves accessibility for the linkage rod to the upper control arm.

According to an embodiment of the present invention said lower control arm has two separate connection locations connectable to said vehicle frame.

Hereby a rigid connection to the vehicle frame is achieved which is able to handle the forces applied to it, transversal as well as longitudinal forces as seen in relation to the driving direction of the vehicle, and bending forces.

According to an embodiment of the present invention said linkage rod is curved. Hereby the linkage rod may reach around other parts of the front wheel suspension assembly such that better packaging characteristics may be achieved.

According to a second aspect of the present invention a vehicle is disclosed which is provided with a front wheel suspension assembly according to any one of the preceding claims. The vehicle will hence be provided with improved ride comfort for any passenger of the vehicle as discussed above in relation to the first aspect of the invention, and improved packaging characteristics and freedom of design for a vehicle designer due to the compact design as also discussed above. All advantages gained by the front wheel suspension assembly are also gained by the vehicle.

According to an embodiment of the present invention said vehicle is provided with front wheel drive. A front wheel drive type of vehicle, or a multiple axle type of vehicle also driving on its front axle, has very difficult packaging characteristics at its front wheel suspension due to the presence of the drive shaft. The front wheel suspension assembly according to the first aspect of the present invention will even further improve especially the packaging characteristics and freedom of design for a vehicle designer in this context.

### BRIEF DESCRIPTION OF THE DRAWINGS

The present invention will now be described in more detail through exemplary but non-limiting embodiments with reference to the accompanying drawings, in which
Fig. 1 is a perspective view on a front wheel suspension assembly according to the present invention at a left hand side of a vehicle showing the assembly obliquely from behind,
Fig. 2 is a perspective view of the embodiment of Fig 1, showing the assembly obliquely from the front,
Fig. 3 is a rear view of a schematical representation of a front wheel suspension assembly according to the present invention.

### DETAILED DESCRIPTION OF PREFERRED EMBODIMENTS

In the following any reference to transversal and longitudinal directions and to forward and rearward directions respectively, refers to the directions as seen in relation to a driving direction of a vehicle if no other explanation is provided. A vehicle according to the invention may be any type of vehicle on which high demands are placed on handling properties and on the ride comfort for vehicle passengers, and for which good packaging in the area of the wheel suspension is difficult to achieve. Such a vehicle may commonly be a passenger car, especially a high-end range of car. However, the present invention may well be found advantageous in combination with vehicles also of other types in which other design constraints apply.

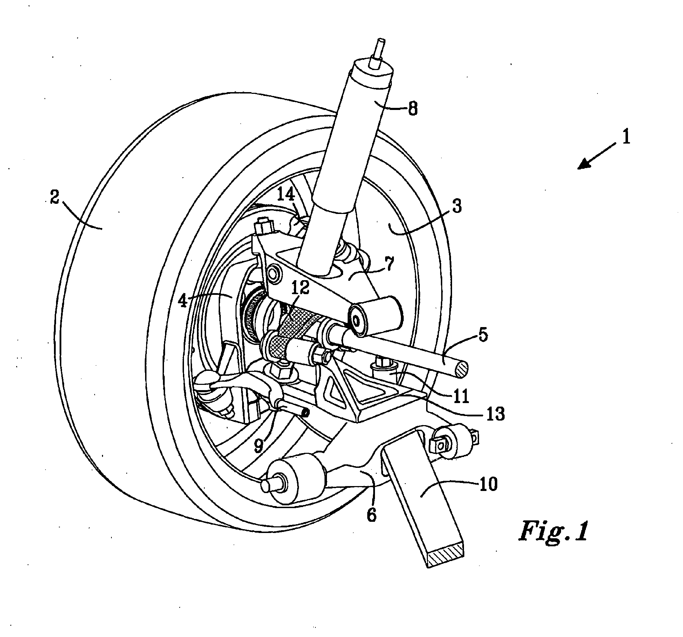

With reference now to Fig. 1, an embodiment of the present invention which at present time is preferred is disclosed. Similar items of each figure will have similar reference numerals. A front wheel suspension of a passenger car (not shown) is generally denoted 1. The front wheel suspension 1 is one embodiment of a front wheel suspension assembly according to the claims. The invention may also be utilised at a rear wheel suspension, but the advantages gained by the present invention are more pronounced at a front wheel suspension. The car has a front wheel axle which is divided such that is has an independent wheel suspension at each side of the car. The figure shows a wheel tyre 2 on a wheel rim 3 making up the vehicle wheel. A wheel carrier 4 is located generally centrally within the vehicle wheel and is connected to the wheel bearings and the drive shaft 5. The vehicle wheel is bolted to the wheel carrier in a known manner. The vehicle bearings are connected to the vehicle wheel and to the brake disc 14. The wheel carrier 4 holds the brake calipers 15. Furthermore, the wheel carrier 4 is coupled to a lower control arm 6 at a position vertically seen below the wheel bearings. It is also coupled to an upper control arm 7 at a position vertically seen above the wheel bearings, and to a tie rod 9. The wheel carrier 4 is coupled to the lower and upper control arms 6, 7 and to the tie rod 9 through respective ball joints. Both of the ball joints holding the upper and the lower control arms 6, 7 are located at a position generally within the wheel rim 3. The tie rod 9 is further connected through a steering assembly to the steering wheel of the vehicle in a known manner and is not shown.

To the upper control arm 7 a shock absorber 8 is hingedly coupled close to the wheel carrier 4. The shock absorber 8 may rotate around an axis which is located in the longitudinal direction of the vehicle. The shock absorber 8 is at its opposite end coupled to a shock absorber tower and to the vehicle body at a side beam of the vehicle in a known manner, of which none is shown. The shock absorber 8 is mounted in an oblique angle to the vertical such that it's vertically seen upper end is located slightly towards the vehicle centre. Furthermore, it's upper end is slightly tilted longitudinally seen forwardly in relation to its lower end. Other positions may apply. The shock absorber 8 may be of a spring-and-damper kind, but other shock absorber types may also be used, such as separated springs and dampers. The shock absorber 8 may also be mounted to the lower control arm 6, although better packaging is achieved through its mounting to the upper control arm 7.

The lower control arm 6 is at least partially hollow to accommodate a leaf spring 10. The leaf spring 10 is coupled to the lower control arm 6, at a location within it, through a link 11 which is hanging from an upper wall of the lower control arm 6. The leaf spring 10 is at its other end accommodated in a vehicle frame in a known manner (not shown) and resting on a rubber pad. An opening in a wall facing the vehicle engine (not shown) guides the leaf spring 10 out of the lower control arm 6. A lower surface of an upper part of the vehicle frame is also resting on another rubber pad on top of the leaf spring in between the two ends of the leaf spring 10.

The upper control arm 7 is at its wheel carrier end as already described connected to the wheel carrier through a ball joint in order to provide liberty of movement for the wheel carrier 4 and the vehicle wheel. At its opposite end it is provided with a bushing and hingedly coupled to the vehicle frame such that it may rotate around a generally horizontal and longitudinal axis at said bushing centre and resulting in a possible up-and-down movement of its wheel carrier end. The bushing also provides liberty to move slightly in a radial direction as seen in relation to the bushing centre, but is limited in movement in a longitudinal direction.

The lower control arm 6 is generally L-shaped such that it has a top portion, a heel portion and a toe portion. The top portion is located on a first straight line together with the heel portion, and the heel portion is located on a second straight line together with the toe portion, whereby the first and the second straight lines intersect at the heel portion. The angle between the first and the second straight lines is generally 90°. The lower control arm 6 is located such that it during normal use of the vehicle as a whole is located in a generally horizontal plane. The first straight line is located generally transversely to the vehicle and the second straight line is located generally longitudinally in relation to the vehicle, such that the heel portion is located forwardly of the toe portion. The top portion of the lower control arm 6 is coupled through the already mentioned ball joint to the wheel carrier 4. The lower control arm 6 is provided with a respective bushing at the heel portion and the toe portion to the vehicle frame. The bushing which is located at the heel portion is more rigid in terms of radial movement from the bushing centre axis than the bushing which is located at the toe portion. Hereby a more rigid behaviour may be achieved by the heel portion bushing as seen in relation to the toe portion bushing. Through the resulting softer behaviour of the toe portion bushing, the top portion ball joint of the lower control arm 6 is allowed to not only move up and down through the rotation around the horizontal axis provided by the two bushings, but also to rotate slightly in the horizontal plane around a vertical axis defined by the heel portion bushing. Consequently the lower end of the wheel carrier 4 is allowed a corresponding longitudinal movement.

The vertically seen upper side of the lower control arm 6 is provided with a bracket or cantilever 13 pointing upwardly and ending with a ball joint. The bracket 13 is one embodiment of a shoulder according to the claims. The bracket 13 is fixedly connected at its base through bolts to the lower control arm 6, such that no relative movement between the base of the bracket 13 and the lower control arm 6 may take place. To improve the rigidity of the bracket 13 it is designed to have a base which is generally triangular or rectangular in shape. The base of the bracket 13 is larger than the corresponding sides at its opposite end at the ball joint. The reason behind this is to achieve a bracket 13 which may withstand the shear and bending forces induced to it by the vehicle wheel. The ball joint at the top end of the bracket 13 is located generally at a position in the middle between the upper and lower control arms 6, 7. The base of the bracket 13 is connected to the lower control arm 6 generally at a position in the middle of the lower control arm 6 between the top portion and the heel portion. The bracket 13 could instead be produced in one piece with the lower control arm 6. The object which will be later described and which is coupled to the ball joint will perform best if connected close to the wheel carrier 4. The forces appearing in the object will increase the further away from the wheel carrier 4 it is located. On the other hand, there is little space left close to the wheel carrier 4, and hence it is a matter of balancing the appearing forces against the possibilities to pack the structures in a limited space.

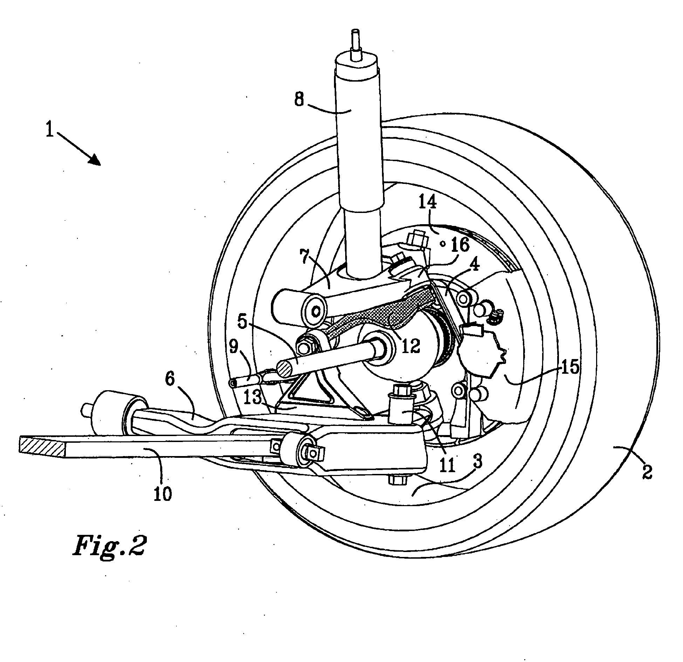

The upper control arm 7 is provided with a bushing on a shoulder 16 at a position close to the attachment point of the shock absorber 8 to the upper control arm 7. This may be best viewed in Fig. 2. The shoulder 16 and bushing do not need to be located close to the attachment point of the shock absorber 8 as such, but both the shock absorber 8 and the object which will be later described and which is coupled to the bushing perform best if connected close to the wheel carrier 4. Again, it is a matter of balancing forces against space left to add more structures. The shoulder 16 is pointing forwardly and slightly upwardly. The shoulder 16 is produced in one piece with the upper control arm 7. As in the case of the bracket 13, this shoulder 16 could be produced as a separate entity and fixedly fastened to the upper control arm 7.

Between the shoulder 16 and the bracket 13 a linkage rod 12 made of steel is interconnected. It is preferable that the linkage rod 12 is light weight. It should yet still be rigid and the material and design choices in this regard must balance these two characteristics. The linkage rod 12 is connected to the shoulder 16 by the bushing and to the bracket 13 by the ball joint. The linkage rod 12 is designed to generally not deform when subjected to the forces that may occur therein. It thus provides a rigid coupling between the upper and lower control arms 6, 7. The linkage rod 12 is generally curved according to the preferred embodiment of the present invention, but could have any shape to bridge the gap between the shoulder 16 and the bracket 13 in order to allow for adequate packaging properties for the front wheel suspension as a whole. The ball joint on the bracket 13 and the bushing on the shoulder 16 are located such that the linkage rod 12 may follow the movements of the upper and lower control arms 6, 7, but at the same time provide adequate support for the upper and lower control arms 6, 7 such that any longitudinal movement of the lower control arm 6 is transferred through the linkage rod 12 to the upper control arm 7. As a result, the bushing of the upper control arm 7 may receive forces close to the wheel carrier 4. The bushing of the upper control arm 7 is as a result forced by the linkage rod 12 to move together with the lower control arm 6 as a response to a backwardly directed force, no matter at what height the applied force is acting. Hereby proper caster angle control may be achieved despite the low located upper control arm. It is contemplated that the linkage rod 12 may instead be provided with a bushing at its lower control arm end, and with a ball joint at its upper control arm end, or a respective ball joint at both ends. Other joint types giving similar result may also be used. One advantage gained by the joint types as in Figs. 1 and 2 is that a bushing requires less space than a ball joint in terms of movement of the interconnected parts. The space occupied by other parts of the suspension in the area of the upper joint between the upper control arm 7 and the linkage rod 12 is in the preferred embodiment less than that of other parts of the suspension in the area of the lower joint, such that the chosen joint type at the respective location allows for in the desired movement while occupying less space.

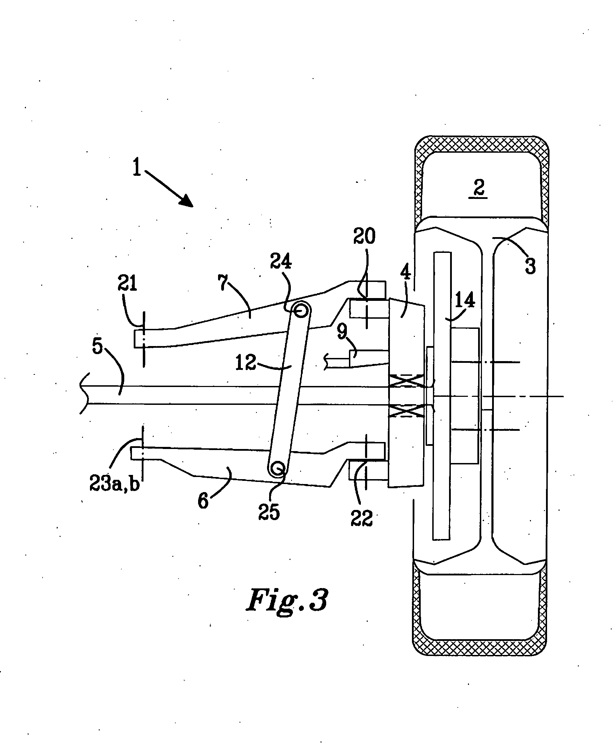

In order to enhance and distil the features of the present invention the schematical Fig. 3 will now be discussed. All features that are not necessary to perform the present invention are left out. Both the upper and the lower control arms 6, 7 are held essentially horizontally and the linkage rod 12 is interconnecting the upper and the lower control arms 6, 7. Due to the weight of the vehicle and to the forces acting on the vehicle in general and on the wheel in particular during use of the vehicle, the upper and the lower control arms 6, 7 are allowed to move in the vertical plane by the assistance of rotational joints 20, 21, 22, 23a and 23b at each respective end. These rotational joints 20, 21, 22, 23a and 23b only allow minor radial deflection away from the rotational joint longitudinal axis such that a generally rigid behaviour is achieved in the corresponding directions. The upper control arm 7 is in its most schematical embodiment a straight rod. Additionally, the lower control arm 6 has a built-in compliance at its vehicle frame connection end to allow the wheel, when subjected to a longitudinal force, some longitudinal motion away from its rest position as seen in the driving direction of the vehicle. This is achieved by the lower control arm 6 having two rotational joints 23a and 23b at its vehicle frame connection end. These two rotational joints 23a and 23b are located at generally similar vertical height and distended from each other in the longitudinal direction of the driving direction of the vehicle. One of these rotational joints 23a provides a similar rigid radial behaviour as the other ones already described 20, 21 and 22, but one rotational joint 23b, preferably the rear one, provides some resilient radial flexibility, whereby the lower control arm 6 in its vehicle wheel connection end is allowed some resiliency in the horizontal plane due to geometrical reasons. It is though noted that the lower control arm 6, as well as the upper control arm 7 are rigid as such. The lower control arm 6 is consequently in its most schematical embodiment a rigid rod connecting the three rotational joints 22, 23a and 23b, either as a V-shape or as an L-shape. Other shapes may apply.

The linkage rod 12 is in its most schematical embodiment a straight rod. Any shape may apply. Its shape is mostly determined by the other items located in the space at the inside of the vehicle wheel. The linkage rod 12 is interconnecting the upper and lower control arms 6, 7 by the aid of a joint 24, 25 at either end. It is noted that the linkage rod 12 does not need to connect to either one or both of upper and lower control arms 6, 7 at its ends, but may do so at intermediate parts thereof. The joints 24, 25 are designed such that they allow the upper and lower control arms 6, 7 to follow the movements of the vehicle wheel in relation to the vehicle body, but at the same time force the upper and lower control arms 6, 7 to move together in the longitudinal direction. If the lower control arm 6 is forced backwards in relation to the vehicle body, *i.a.* due to the braking of the vehicle, the linkage rod 12 constraints the movements of the upper control arm 7 to follow the lower control arm 6 backwards. This both limits the backwards movement of the lower control arm 6 to some extent as well as it forces the upper control arm 7 backwards, although the upper control arm 7 under such conditions is subjected to a forwardly directed force.

Caster is the line between the ball joint 20 of the upper control arm 7 and the ball joint 22 of the lower control arm 6 when seen from the side of the vehicle as in Fig. 3. When, as in a normal passenger car, the caster has an oblique angle slightly forwardly in relation to the vertical it is called a caster angle. A common caster angle is approximately 3 to 7 °. Through the addition of the linkage rod 12 proper caster angle control may be achieved although the upper control arm 7 is located at a low level as discussed initially. When a longitudinal force is applied at the vehicle wheel centre, the upper and lower control arms 6, 7 are receiving approximately equal forces. Under such conditions the caster angle is not affected in a double wish bone suspension if the longitudinal stiffness for the upper and lower control arms 6, 7 are approximately equal. However, when a longitudinal force is applied to the wheel at ground level, as during braking of the vehicle, the upper and lower control arms 6, 7 are affected very differently. The lower control arm 6 may well be subjected to a longitudinal force which is twice as high as the braking force at ground level, whereas the upper control arm 7 is merely subjected to a force which is equal to the braking force, although directed in the opposite (*i.e.* forward) direction. If the longitudinal stiffness of the upper and lower control arms 6, 7 are similar, the caster angle will be much affected which is not desirous. It has thus been realised by the Applicant that a linkage rod 12 must provide adequate rigidity between the upper and lower control arms 6, 7 such that the upper control arm 7 is forced to move with the lower control arm 6 although the upper control arm 7 is subjected to a force in the opposite direction. An improved braking performance is thus achieved by the present invention by the improved control of caster angle through the presence of the rigid linkage rod 12 forcing the upper control arm 7 backwards during braking. This in turn allows the longitudinal compliance at wheel centre to be chosen to provide desirable ride comfort.

Although the present invention has been described with reference to the accompanying drawings, other embodiments of the present invention may be contemplated and included in the scope of the claims. Such other embodiments may include other locations or angular position of the shock absorbers, of which one is a horizontal location. The shock absorber may also be coupled to a absorber carrier which is not a rod like structure, but which may be assembled by for instance two legs in a triangular manner in order to be fastened to the lower control arm. The upper control arm may then be located in the space created in between the two legs. The springing effect may be achieved not by a coil or spiral spring, but by a leaf spring. Another embodiment is the use of a sub-frame, such that *i.a.* the control arms 6, 7 are first coupled to the sub-frame, which in turn is coupled to the vehicle frame. The linkage rod may also be designed having a curvature in order to better adapt to the ambient conditions. One such design includes a linkage rod which is generally located at its ends as in the enclosed drawings, but which runs above the upper control arm and on the transversally seen outer side of the shock absorber.

## Claims

1. A front wheel suspension assembly (1) for a vehicle, comprising
a lower control arm (6) which at a vehicle wheel connection end is hingedly connectable to a lower end of a vehicle wheel carrier (4), and which at a vehicle frame connection end is hingedly connectable to a vehicle frame,
an upper control arm (7) which at a vehicle wheel connection end is hingedly connectable to an upper end of said vehicle wheel carrier (4), and which at a vehicle frame connection end is hingedly connectable to said vehicle frame, wherein said vehicle wheel connection end of said upper control arm is adapted to be located generally within a vehicle wheel rim (3),
a shock absorber (8) which is connectable to a vehicle body and is hingedly connected to one of said upper and lower control arms (7, 6),
a linkage rod (12) hingedly connected between said lower control arm (6) and said upper control arm (7), said lower control arm (6) has a vertically seen, upwardly reaching shoulder (13) for connection to said linkage rod (12) **characterised in that** said upper control arm (7) has a vertically seen, forwardly pointing and upwardly reaching shoulder (16) arranged above the control arm (7) for connection to said linkage rod (12).

2. A front wheel suspension assembly (1) according to claim 1, wherein said shock absorber (8) is hingedly connected to only one of said upper and lower control arms (6, 7).

3. A front wheel suspension assembly (1) according to any one of the preceding claims, wherein either one or both of said lower control arm (6) and said upper control arm (7) is a rigid rod.

4. A front wheel suspension assembly (1) according to any one of the preceding claims, wherein said lower control arm (6) at its vehicle frame connection end is hingedly connectable to said vehicle frame at two generally horizontally located positions.

5. A front wheel suspension assembly (1) according to claim 4, wherein said lower control arm (6) is generally L-shaped.

6. A front wheel suspension assembly (1) according to any one of the preceding claims, wherein said linkage rod (12) is located closer to the respective vehicle wheel connection end than to the respective vehicle frame connection end.

7. A front wheel suspension assembly (1) according to any one of the preceding claims, wherein said linkage rod (12) and said lower control arm (6) are interconnected by a ball joint.

8. A front wheel suspension assembly (1) according to any one of the preceding claims, wherein said linkage rod (12) and said upper control arm (7) are interconnected by a bushing.

9. A front wheel suspension assembly (1) according to any one of the preceding claims, wherein said lower control arm (6) has two separate connection locations connectable to said vehicle frame.

10. A front wheel suspension assembly (1) according to any one of the preceding claims, wherein said linkage rod (12) is curved.

11. A vehicle being provided with a front wheel suspension assembly (1) according to any one of the preceding claims.

12. A vehicle according to claim 11, wherein said vehicle is provided with front wheel drive.

## Patentansprüche

1. Vorderradaufhängungsanordnung (1) für ein Fahrzeug, die Folgendes umfasst:
einen unteren Lenker (6), der an einem Fahrzeugradverbindungsende an einem unteren Ende eines Fahrzeugradträgers (4) angelenkt sein kann und der an einem Fahrzeugrahmenverbindungsende an einem Fahrzeugrahmen angelenkt sein kann,
einen oberen Lenker (7), der an einem Fahrzeugradverbindungsende an einem oberen Ende des Fahrzeugradträgers (4) angelenkt sein kann und der an einem Fahrzeugrahmenverbindungsende an dem Fahrzeugrahmen angelenkt sein kann, wobei das Fahrzeugradverbindungsende des oberen Lenkers dazu ausgelegt ist, im Allgemeinen innerhalb einer Fahrzeugfelge (3) angeordnet zu sein,
einen Stoßdämpfer (8), der mit einem Fahrzeugaufbau verbunden werden kann und der mit dem oberen oder dem unteren Lenker (7, 6) gelenkartig verbunden ist,
eine Verbindungsstange (12), die zwischen dem unteren Lenker (6) und dem oberen Lenker (7) angelenkt ist, wobei der untere Lenker (6) eine vertikal gesehen nach vorne zeigende und nach oben reichende Schulter (13) zur Verbindung mit der Verbindungsstange (12) aufweist, **dadurch gekennzeichnet, dass** der obere Lenker (7) eine vertikal gesehen nach vorne zeigende und nach oben reichende Schulter (16), die über dem Lenker (7) angeordnet ist, zur Verbindung mit der Verbindungsstange (12) aufweist.

2. Vorderradaufhängungsanordnung (1) nach Anspruch 1, wobei der Stoßdämpfer (8) entweder an dem oberen oder dem unteren Lenker (6, 7) angelenkt ist.

3. Vorderradaufhängungsanordnung (1) nach einem der vorhergehenden Ansprüche, wobei der untere Lenker (6) und/oder der obere Lenker (7) eine starre Stange ist.

4. Vorderradaufhängungsanordnung (1) nach einem der vorhergehenden Ansprüche, wobei der untere Lenker (6) an seinem Fahrzeugrahmenverbindungsende mit dem Fahrzeugrahmen an zwei im Wesentlichen horizontal liegenden Positionen angelenkt sein kann.

5. Vorderradaufhängungsanordnung (1) nach Anspruch 4, wobei der untere Lenker (6) im Allgemeinen L-förmig ist.

6. Vorderradaufhängungsanordnung (1) nach einem der vorhergehenden Ansprüche, wobei sich die Verbindungsstange (12) näher an dem jeweiligen Fahrzeugradverbindungsende als an dem jeweiligen Fahrzeugrahmenverbindungsende befindet.

7. Vorderradaufhängungsanordnung (1) nach einem der vorhergehenden Ansprüche, wobei die Verbindungsstange (12) und der untere Lenker (6) durch ein Kugelgelenk miteinander verbunden sind.

8. Vorderradaufhängungsanordnung (1) nach einem der vorhergehenden Ansprüche, wobei die Verbindungsstange (12) und der obere Lenker (7) durch eine Buchse miteinander verbunden sind.

9. Vorderradaufhängungsanordnung (1) nach einem der vorhergehenden Ansprüche, wobei der untere Lenker (6) zwei separate Verbindungsstellen aufweist, die mit dem Fahrzeugrahmen verbunden sein können.

10. Vorderradaufhängungsanordnung (1) nach einem der vorhergehenden Ansprüche, wobei die Verbindungsstange (12) gekrümmt ist.

11. Fahrzeug, das mit einer Vorderradaufhängungsanordnung (1) nach einem der vorhergehenden Ansprüche versehen ist.

12. Fahrzeug nach Anspruch 11, wobei das Fahrzeug mit einem Vorderradantrieb versehen ist.

## Revendications

1. Ensemble de suspension avant (1) pour un véhicule, comprenant
un bras de suspension inférieur (6) qui, au niveau d'une extrémité de raccordement à une roue de véhicule, peut être raccordé de manière articulée à une extrémité inférieure d'un support de roue de véhicule (4) et qui, au niveau d'une extrémité de raccordement à un châssis de véhicule, peut être raccordé de manière articulée à un châssis de véhicule,
un bras de suspension supérieur (7) qui, au niveau d'une extrémité de raccordement à une roue de véhicule, peut être raccordé de manière articulée à une extrémité supérieure dudit support de roue de véhicule (4) et qui, au niveau d'une extrémité de raccordement à un châssis de véhicule, peut être raccordé de manière articulée audit châssis de véhicule, ladite extrémité de raccordement à une roue de véhicule dudit bras de suspension supérieur étant conçue pour être située, de manière générale, à l'intérieur d'une jante de roue de véhicule (3),
un amortisseur (8) qui peut être raccordé à une carrosserie de véhicule et est raccordé de manière articulée à l'un desdits bras de suspension supérieur et inférieur (7, 6),
une barre de liaison (12) raccordée de manière articulée entre ledit bras de suspension inférieur (6) et ledit bras de suspension supérieur (7), ledit bras de suspension inférieur (6) comportant un épaulement (13) s'étendant vers le haut, dans une vue en élévation, destiné à être raccordé à ladite barre de liaison (12) **caractérisé en ce que** ledit bras de suspension supérieur (7) comporte un épaulement (16) s'étendant vers le haut et pointant vers l'avant, dans une vue en élévation, disposé au-dessus du bras de suspension (7) et destiné à être raccordé à ladite barre de liaison (12).

2. Ensemble de suspension avant (1) selon la revendication 1, dans lequel ledit amortisseur (8) est raccordé de manière articulée à un seul desdits bras de suspension supérieur et inférieur (6, 7).

3. Ensemble de suspension avant (1) selon l'une quelconque des revendications précédentes, dans lequel l'un desdits bras de suspension inférieur (6) et bras de suspension supérieur (7), ou les deux, est/sont une barre rigide.

4. Ensemble de suspension avant (1) selon l'une quelconque des revendications précédentes, dans lequel ledit bras de suspension inférieur (6), au niveau de son extrémité de raccordement à un châssis de véhicule, peut être raccordé de manière articulée audit châssis de véhicule en deux positions situées, de manière générale, horizontalement.

5. Ensemble de suspension avant (1) selon la revendication 4, dans lequel ledit bras de suspension inférieur (6) présente, de manière générale, la forme d'un L.

6. Ensemble de suspension avant (1) selon l'une quelconque des revendications précédentes, dans lequel ladite barre de liaison (12) est située plus près de l'extrémité de raccordement à une roue de véhicule respective que de l'extrémité de raccordement à un châssis de véhicule respective.

7. Ensemble de suspension avant (1) selon l'une quelconque des revendications précédentes, dans lequel ladite barre de liaison (12) et ledit bras de suspension inférieur (6) sont mutuellement raccordés par le biais d'un joint à rotule.

8. Ensemble de suspension avant (1) selon l'une quelconque des revendications précédentes, dans lequel ladite barre de liaison (12) et ledit bras de suspension supérieur (7) sont mutuellement raccordés par le biais d'une bague.

9. Ensemble de suspension avant (1) selon l'une quelconque des revendications précédentes, dans lequel ledit bras de suspension inférieur (6) comporte deux points de raccordement séparés pouvant être raccordés audit châssis de véhicule.

10. Ensemble de suspension avant (1) selon l'une quelconque des revendications précédentes, dans lequel ladite barre de liaison (12) est courbée.

11. Véhicule équipé d'un ensemble de suspension avant (1) selon l'une quelconque des revendications précédentes.

12. Véhicule selon la revendication 11, ledit véhicule étant du type à traction avant.
